# EUROPÄISCHE PATENTANMELDUNG

(11) **EP 1 464 623 A2**
(43) Veröffentlichungstag der Anmeldung: **06.10.2004**
(21) Anmeldenummer: 04005515.4
(22) Anmeldetag: 09.03.2004
(51) Int. Cl.: C02F 1/42

(54) **Anordnung zur Entfernung von Metallionen aus Dachablaufwässern**

(30) Priorität: 26.03.2003 DE 10313670
(71) Anmelder: KM Europa Metal Aktiengesellschaft, 49074 Osnabrück (DE)
(72) Erfinder: Priggemeyer, Sonja, Dr., 49134 Wallenhorst (DE); Runde, Herbert, 48268 Greven (DE); Lehmann, Burkhart, Dr., 49124 Georgsmarienhütte (DE); Priggemeyer, Stefan, Dr., 49134 Wallenhorst (DE); Harnischmacher, Werner, Dr., 49078 Osnabrück (DE); Dettmer, Frank, 49082 Osnabrück (DE)
(74) Vertreter: Pietrzykowski, Anja

(57) **Zusammenfassung**

Die Anordnung (1) zur Entfernung von Metallionen aus Dachablaufwässern weist ein mit den Dachablaufwässern beschickbares Abscheidegehäuse (2) für Grobschmutz und ein mit dem Abscheidegehäuse (2) Dachablaufwässer überführend verbundenes Filtergehäuse (16) mit einem zentralen, von unten nach oben von den Dachablaufwässern durchströmten Filter (32) mit Metallionen austauschendem Filtermaterial (39) auf. Der Filter (32) ist vertikal lösbar in das Filtergehäuse (16) eingesetzt und mit einem Ablauf (37) für behandelte Dachablaufwässer verbunden.

## Beschreibung

Die Erfindung betrifft eine Anordnung zur Entfernung von Metallionen aus Dachablaufwässern.

Heutzutage werden in einem verstärkten Maße Dachablaufwässer aufgefangen, um sie einer privaten oder industriellen Nutzung zuzuführen oder sie auch in Gärten einzusetzen. Die Dachablaufwässer enthalten jedoch Einträge von Metallstäuben aus der Luft und/oder der Umgebung sowie Einträge durch die diversen Materialien, mit denen Dächer bedeckt sind. Mit den Dachablaufwässern erfolgt somit ein Eintrag von Metallen in Kläranlagen und in die Umwelt. Eine Minimierung der Metalleinträge verbessert aber die Umweltqualität von Gewässern, Böden und Kläranlagen (Verringerung des Metallgehalts des Klärschlamms), macht Dachablaufwässer für weitere Anwendungen nutzbar und verringert so den Verbrauch an von den entsprechenden Versorgungsunternehmen bereit gestelltem Trinkwasser. Die in den Dachablaufwässern vorzugsweise enthaltenen Metallionen sind solche auf Kupfer-, Zink- oder Bleibasis.

Zum Stand der Technik zählt ein Vorschlag entsprechend der DE 198 59 386 A1. Hierbei wird ein Metallionen austauschender Filter unmittelbar einer Dachentwässerung in Form eines Regenfallrohrs zugeordnet. Ein Gebäude mit mehreren Regenfallrohren müßte dann zwangsläufig mit einer entsprechenden Anzahl von Filtern versehen werden. Der hiermit verbundene Aufwand wäre hoch.

Der Erfindung liegt - ausgehend vom Stand der Technik ― die Aufgabe zugrunde, eine Anordnung zur Entfernung von Metallionen aus Dachablaufwässern zu schaffen, die in wirtschaftlicher Weise auch einer größeren Anzahl von Dachentwässerungen zentral zugeordnet werden kann.

Diese Aufgabe wird mit den im Patentanspruch 1 angegebenen Merkmalen gelöst.

Danach werden jetzt bevorzugt unterhalb der Erdoberfläche zwei Gehäuse angeordnet, denen jeweils spezielle Funktionen überantwortet werden. Ein Abscheidegehäuse verfügt über einen Zulauf, an den alle Dachentwässerungen, insbesondere Regenfallrohre, eines Gebäudes oder auch eines größeren Gebäudekomplexes mindestens indirekt angeschlossen sind. Dieses Abscheidegehäuse ist so aufgebaut, daß es den von den Dachablaufwässern mitgeführten Grobschmutz in Form von z.B. Laub und Geäst von den Dachablaufwässern trennt. Die dann aus dem Abscheidegehäuse tretenden Dachablaufwässer gelangen vom Grobschmutz befreit in ein auf etwa demselben Höhenniveau liegendes Filtergehäuse, in welchem sich in zentraler Position ein Filter mit Metallionen austauschendem Filtermaterial befindet. Die im oberen Höhenbereich in das Filtergehäuse tretenden Dachablaufwässer strömen am unteren Ende in den Filter hinein, durchströmen das Filtermaterial im Filter, wobei die Metallionen ausgetauscht werden, und verlassen den Filter in Richtung auf einen Ablauf, der ebenfalls im oberen Höhenbereich des Filtergehäuses vorgesehen ist. Von diesem Ablauf können die behandelten Dachablaufwässer dann bei Bedarf einer geeigneten Nutzung zugeführt werden oder nur in den Boden versickern.

Der Filter ist lösbar in das Filtergehäuse eingesetzt, um ihn von Zeit zu Zeit austauschen und das Filtermaterial regenerieren zu können. Dazu weist das Filtergehäuse einen entsprechenden Gehäusedeckel auf.

Auch das Abscheidegehäuse besitzt einen Gehäusedeckel, um das Abscheidegehäuse von Zeit zu Zeit reinigen zu können.

Sowohl das Abscheidegehäuse als auch das Filtergehäuse können in Fertigbauweise aus Beton hergestellt sein, so daß sie problemlos vor Ort in ausgehobene Baugruben eingesetzt und untereinander sowie mit dem Zulauf bzw. dem Ablauf verbunden und anschließend bis auf den Zugang zu den Gehäusedeckeln in das Erdreich eingebettet werden können.

Die Gehäuse können ein- oder mehrteilig ausgebildet sein.

Die Größe der Gehäuse ist abhängig von der am Aufstellort im Durchschnitt vorkommenden Niederschlagsmenge. Diese Niederschlagsmenge bedingt neben anderen Faktoren auch die Höhe der Metallkonzentration in den Dachablaufwässern. Hohe Metallkonzentrationen treten meist nur bei geringen Niederschlagsvolumina (bis zu 1 mm Niederschlag) auf. Im Mittel hat man Niederschlagsmengen in einer Größenordnung von 0,4 mm pro 10 Minuten festgestellt. Entsprechend wird dann auch der Filter im Filtergehäuse so ausgelegt, daß Niederschlagsmengen dieser Größenordnung pro Zeitintervall einwandfrei filtriert werden können.

Interne Versuche haben gezeigt, daß ein geeignetes Filtermaterial dann gegeben ist, wenn dieses gemäß Patentanspruch 2 aus synthetischen oder natürlich vorkommenden kristallinen hydratisierten Alumosilikaten mit Gerüststruktur besteht. Insbesondere erweisen sich natürliche Zeolithe, wie z.B. Clinoptilolith, für die Anforderungen an das erfindungsgemäße Filtersystem am besten geeignet.

Eine besonders vorteilhafte Ausführungsform eines Filters besteht in den Merkmalen des Patentanspruchs 3. Danach ist der Filter in Form einer zylindrischen, wandseitig perforierten Patrone ausgebildet und innerhalb eines oben offenen Standrohrs dichtend auf einem bodenseitig des Filtergehäuses vorgesehenen Auflager lageorientiert. Die Höhe des Auflagers ist so bemessen, daß ausreichend große Mengen an Dachablaufwässern über das Auflager von unten in den Filter eintreten können. Die Dachablaufwässer gelangen dann durch die perforierte Wand der Patrone in den Ringraum zwischen der Patrone und dem Standrohr und strömen am oberen Ende aus dem Ringraum in den Ablauf. Die Patrone besteht bevorzugt aus einem geeigneten Kunststoff. Das Material der Filterpatrone ist ebenfalls bevorzugt Kunststoff. Das Auflager kann einen Bestandteil des Filtergehäuses bilden.

Die Dichtung am Auflager ist so ausgebildet, daß das Gewicht der Filterpatrone einschließlich Filtermaterial ausreicht, um die Dachablaufwässer nur von unten in das Filtermaterial einströmen zu lassen. Folglich besteht auch kein Problem, die Filterpatrone nach gegebener Zeit durch das Standrohr nach oben aus dem Filtergehäuse entfemen und eine neue Filterpatrone mit regeneriertem Filtermaterial wieder einsetzen zu können.

Nach Patentanspruch 4 ist das Standrohr höher als der Filter ausgebildet. Das obere Ende des Standrohrs ist mit dem aus dem Filtergehäuse geführten Ablauf kuppelbar. Hierdurch ist sichergestellt, daß die im Filter behandelten Dachablaufwässer einwandfrei dem Ablauf zugeführt werden.

Um zu vermeiden, daß die in das Filtergehäuse einströmenden Dachablaufwässer von oben in das Standrohr treten können, ist entsprechend den Merkmalen des Patentanspruchs 5 der Eintritt der Dachablaufwässer in das Filtergehäuse auf einem niedrigeren Höhenniveau als die Oberkante des Standrohrs vorgesehen.

In diesem Zusammenhang ist es dann gemäß Patentanspruch 6 ferner von Vorteil, wenn am Eintritt der Dachablaufwässer in das Filtergehäuse eine Einlaufschikane vorgesehen ist. Diese Einlaufschikane verhindert nicht nur, daß die Dachablaufwässer in das Standrohr gelangen, sondern sorgt außerdem dafür, daß die in das Filtergehäuse eintretenden Dachablaufwässer im Kreis um den Filter nach unten zum Boden des Filtergehäuses geführt werden, von wo sie dann in den Filter eintreten können.

Die Merkmale des Patentanspruchs 7 sehen vor, daß das als hohler Sockel ausgebildete Auflager über Einlaufbögen verfügt, deren nach oben gerichtete Einlauföffnungen mit die Dachablaufwässer durchlassenden Abdeckungen versehen sind. Diese Abdeckungen haben die Aufgabe, das Eindringen von Verschmutzungen, wie z.B. Pollen etc., in das Filtermaterial zu verhindern. Das Auflager kann als Betonauflager in zylindrischer Form ausgebildet sein. Die Einlaufbögen bestehen vorzugsweise aus L-förmigen Rohren, die in Ausnehmungen in der Wand des Auflagers befestigt sind. Da sich die Abdeckungen der Einlaufbögen im Abstand zum Boden des Filtergehäuses befinden, können sich auf dem Boden des Filtergehäuses auch noch Sedimente aus den Dachablaufwässern absetzen, ohne daß das Filtermaterial verschmutzt wird.

Der Boden des Filters ist perforiert. Er kann als ebene Fläche ausgebildet sein. Vorstellbar ist aber gemäß Patentanspruch 8 auch ein sich nach oben verjüngender perforierter Kegel. Hierdurch wird der Strömungswiderstand verringert. Der Kegel kann aus Kunststoff oder Edelstahl gebildet sein.

Das Aufschwimmen des Filtermaterials im Filter wird entsprechend den Merkmalen des Patentanspruchs 9 durch ein Kunststoffgewebe verhindert, mit welchem der Filter am oberen Ende abgedeckt ist.

Die Abscheidung von Grobschmutz im Abscheidegehäuse wird nach Patentanspruch 10 dadurch intensiviert, daß am Eintritt der Dachablaufwässer in das Abscheidegehäuse mindestens eine Prallwand im Abscheidegehäuse vorgesehen ist.

Schließlich ist gemäß Patentanspruch 11 am Austritt der Dachablaufwässer aus dem Abscheidegehäuse wenigstens eine Tauchwand vorgesehen. Diese Tauchwand ist perforiert, so daß Grobschmutz aufgefangen wird und nicht aus dem Abscheidegehäuse in das Filtergehäuse gelangen kann.

Die Erfindung ist nachfolgend anhand eines in einer Zeichnung veranschaulichten Ausführungsbeispiels näher erläutert.

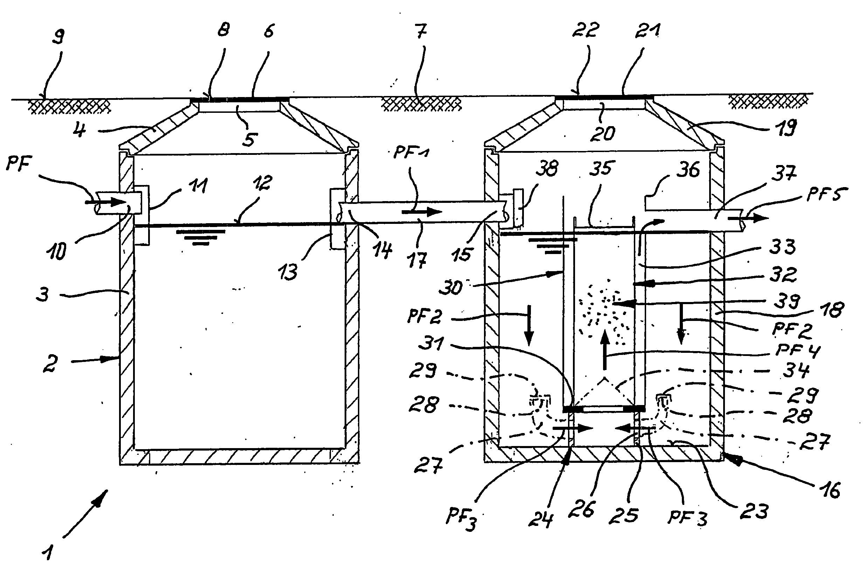

Mit 1 ist in der Zeichnung eine Anordnung zur Entfernung von Metallionen aus Dachablaufwässern bezeichnet.

Die Anordnung 1 umfaßt zunächst ein Abscheidegehäuse 2 aus Beton. Dieses Abscheidegehäuse 2 setzt sich aus einem schachtartigen Unterteil 3 und einem konusartigen Oberteil 4 zusammen, die dicht aber lösbar miteinander verbunden sind. Im Oberteil 4 befindet sich eine zentrale Öffnung 5, die durch einen lösbaren Gehäusedeckel 6 verschlossen ist. Das Abscheidegehäuse 2 ist so in ein Erdreich 7 eingebettet, daß sich die Oberseite 8 des Gehäusedeckels 6 im Niveau mit der Erdoberfläche 9 befindet.

Im oberen Höhenbereich des Unterteils 3 befindet sich ein Eintritt 10 für Dachablaufwässer in Form eines Rohrs. Dieser Eintritt 10 wird von mehreren in der Zeichnung nicht näher veranschaulichten Regenfallrohren eines Gebäudes gespeist, wenn dieses Gebäude beregnet wird.

Die gemäß dem Pfeil PF aus dem Eintritt 10 tretenden Dachablaufwässer treffen auf eine Prallwand 11, von der sie in das Abscheidegehäuse 2 gelangen. An der Prallwand 11 wird Grobschmutz, z.B. in Form von Laub und Geäst, abgeschieden, so daß er sich in dem Abscheidegehäuse 2 absetzen kann. Das Niveau der Dachablaufwässer im Abscheidegehäuse 2 ist mit 12 bezeichnet.

Die vom Grobschmutz befreiten Dachablaufwässer gelangen über eine perforierte Tauchwand 13 in einen Austritt 14 des Abscheidegehäuses 2. Dieser Austritt 14 ist etwa in demselben Höhenbereich wie der Eintritt 10 angeordnet.

Vom Abscheidegehäuse 2 gelangen die Dachablaufwässer gemäß dem Pfeil PF1 durch ein Überlaufrohr 17 zum Eintritt 15 eines Filtergehäuses 16. Auch dieses Filtergehäuse 16 setzt sich aus einem schachtartigen Unterteil 18 sowie einem konischen Oberteil 19 aus Beton zusammen, die dicht aber lösbar miteinander verbunden sind. Mittig des Oberteils 19 befindet sich eine Öffnung 20, die durch einen Gehäusedeckel 21 verschlossen ist. Die Oberseite 22 des Gehäusedeckels 21 liegt im Niveau der Erdoberfläche 9.

Auf dem Boden 23 des Filtergehäuses 16 ist ein Auflager 24 in Form eines hohlen zylindrischen Sockels vorgesehen. Das Auflager 24 kann aus Beton bestehen und einen einstückigen Bestandteil des Unterteils 18 bilden. In der Wand 25 des Auflagers 24 befinden sich mehrere Öffnungen 26. An diese Öffnungen 26 sind L-förmige Einlaufbögen 27 angeschlossen, deren nach oben gerichtete Einlauföffnungen 28 durch Dachablaufwässer durchlassende Abdeckungen 29 verschlossen sind.

Auf das Auflager 24 ist ein oben offenes Standrohr 30 aus Kunststoff gesetzt. Am unteren Ende des Standrohrs 30 befindet sich eine kreisringförmige Scheibendichtung 31. Auf dieser Scheibendichtung 31 ist ein Filter 32 in Form einer zylindrischen, wandseitig perforierten Patrone lageorientiert. Zwischen dem Filter 32 und dem Standrohr 30 wird ein Ringspalt 33 gebildet. Der Ringspalt 33 ist nach oben hin offen. Am unteren Ende des Filters 32 ist ein sich nach oben verjüngender perforierter Kegel 34 angeordnet. Das obere Ende des Filters 32 ist durch ein Kunststoffgewebe 35 abgedeckt.

Der Eintritt 15 in das Filtergehäuse 16 liegt unterhalb einer horizontalen Ebene, welche die Oberkante 36 des Standrohrs 30 schneidet. Knapp unterhalb der Oberkante 36 ist das Standrohr 30 mit einem Ablauf 37 für Dachablaufwässer verbunden. Dieser Ablauf 37 führt in nicht näher veranschaulichter Weise zu einem Nutzer der behandelten Dachablaufwässer. Die Oberkante 36 liegt höher als das Kunststoffgewebe 35 des Filters 32.

Am Eintritt 15 der Dachablaufwässer in das Filtergehäuse 16 befindet sich eine Einlaufschikane 38, durch welche die Dachablaufwässer gemäß den Pfeilen PF2 gezielt um das Standrohr 30 herum nach unten geführt werden. Die Dachablaufwässer gelangen dann durch die Abdeckungen 29 an den Einlauföffnungen 28 und über die Einlaufbögen 27 gemäß den Pfeilen PF3 in das Auflager 24 und von hier aus über den Kegel 34 in den Filter 32, der mit einem Filtermaterial 39 aus dem natürlichen Zeolith Clinoptilolith gefüllt ist. Die in den Dachablaufwässern befindlichen Metallionen werden beim Durchströmen des Filters 32 in Richtung des Pfeils PF4 im Filtermaterial 39 ausgetauscht, so daß über den Ringspalt 33 und den Ablauf 37 Dachablaufwässer gemäß dem Pfeil PF5 in die Umgebung gelangen, welche von Metallionen befreit sind.

Muß das Filtermaterial 39 im Filter 32 regeneriert werden, braucht lediglich der Gehäusedeckel 21 vom Filtergehäuse 16 abgenommen und der Filter 32 nach oben aus dem Filtergehäuse 16 gezogen zu werden. Anschließend kann ein neuer Filter 32 mit regeneriertem Filtermaterial 39 in das Standrohr 30 abgesenkt und dort auf der Scheibendichtung 31 lageorientiert werden. Danach ist die Anordnung 1 wieder betriebsbereit.

### Bezugszeichenaufstellung

- 1 -: Anordnung
- 2 -: Abscheidegehäuse v. 1
- 3 -: Unterteil v. 2
- 4 -: Oberteil v. 2
- 5 -: Öffnung in 4
- 6 -: Gehäusedeckel v. 2
- 7 -: Erdreich
- 8 -: Oberseite v. 6
- 9 -: Erdoberfläche
- 10 -: Eintritt v. 2
- 11 -: Prallwand
- 12 -: Niveau
- 13-: Tauchwand
- 14 -: Austritt v. 2
- 15-: Eintritt v. 16
- 16 -: Filtergehäuse v. 1
- 17 -: Überlaufrohr
- 18 -: Unterteil v. 16
- 19 -: Oberteil v. 16
- 20 -: Öffnung in 19
- 21 -: Gehäusedeckel v. 16
- 22 -: Oberseite v. 21
- 23 -: Boden v. 16
- 24 -: Auflager
- 25 -: Wand v. 24
- 26 -: Öffnungen in 25
- 27 -: Einlaufbögen
- 28 -: Einlauföffnungen v. 27
- 29 -: Abdeckungen v. 28
- 30 -: Standrohr
- 31 -: Scheibendichtung
- 32 -: Filter
- 33 -: Ringspalt zw. 30 u. 32
- 34 -: Kegel
- 35 -: Kunststoffgewebe
- 36 -: Oberkante v. 30
- 37 -: Ablauf
- 38 -: Einlaufschikane
- 39 -: Filtermaterial

- PF -: Pfeil
- PF1 -: Pfeil
- PF2 -: Pfeil
- PF3 -: Pfeil
- PF4 -: Pfeil
- PF5 -: Pfeil

## Patentansprüche

1. Anordnung zur Entfernung von Metallionen aus Dachablaufwässern, die ein mit den Dachablaufwässern beschickbares Abscheidegehäuse (2) für Grobschmutz und ein mit dem Abscheidegehäuse (2) Dachablaufwässer überführend verbundenes Filtergehäuse (16) mit einem zentralen, von unten nach oben von den Dachablaufwässern durchströmten Filter (32) mit Metallionen austauschendem Filtermaterial (39) aufweist, wobei der Filter (32) vertikal lösbar in das Filtergehäuse (16) eingesetzt und mit einem Ablauf (37) für die behandelten Dachablaufwässer verbunden ist.

2. Anordnung nach Patentanspruch 1, bei welcher das Filtermaterial (39) aus synthetischen oder natürlich vorkommenden kristallinen hydratisierten Alumosilikaten mit Gerüststruktur besteht.

3. Anordnung nach Patentanspruch 1 oder 2, bei welcher der Filter (32) in Form einer zylindrischen, wandseitig perforierten Patrone ausgebildet und innerhalb eines oben offenen Standrohrs (30) auf einem bodenseitig des Filtergehäuses (16) vorgesehenen Auflager (24) dichtend lageorientierbar ist.

4. Anordnung nach Patentanspruch 3, bei welcher das Standrohr (30) höher als der Filter (32) ausgebildet und am oberen Ende mit dem aus dem Filtergehäuse (16) geführten Ablauf (37) kuppelbar ist.

5. Anordnung nach Patentanspruch 3 oder 4, bei welcher der Eintritt (15) der Dachablaufwässer in das Filtergehäuse (16) auf einem niedrigeren Höhenniveau als die Oberkante (36) des Standrohrs (30) vorgesehen ist.

6. Anordnung nach einem der Patentansprüche 1 bis 5, bei welcher am Eintritt (15) der Dachablaufwässer in das Filtergehäuse (16) eine Einlaufschikane (38) vorgesehen ist.

7. Anordnung nach einem der Patentansprüche 3 bis 6, bei welcher das als hohler Sockel ausgebildete Auflager (24) über Einlaufbögen (27) verfügt, deren nach oben gerichtete Einlauföffnungen (28) mit die Dachablaufwässer durchlassenden Abdeckungen (29) versehen sind.

8. Anordnung nach einem der Patentansprüche 1 bis 7, bei welcher am unteren Ende des Filters (32) ein sich nach oben verjüngender perforierter Kegel (34) vorgesehen ist.

9. Anordnung nach einem der Patentansprüche 1 bis 8, bei welcher das obere Ende des Filters (32) durch ein Kunststoffgewebe (35) abgedeckt ist.

10. Anordnung nach einem der Patentansprüche 1 bis 9, bei welcher am Eintritt (10) der Dachablaufwässer in das Abscheidegehäuse (2) mindestens eine Prallwand (11) im Abscheidegehäuse (2) vorgesehen ist.

11. Anordnung nach einem der Patentansprüche 1 bis 10, bei welcher am Austritt (14) der Dachablaufwässer aus dem Abscheidegehäuse (2) wenigstens eine, insbesondere perforierte, Tauchwand (13) vorgesehen ist.
